(19) 

**Europäisches Patentamt**

**European Patent Office**

**Office européen des brevets**

(11) **EP 4 687 341 A1**

(12) **EUROPEAN PATENT APPLICATION**

(43) Date of publication:
04.02.2026 Bulletin 2026/06

(21) Application number: 24306293.2

(22) Date of filing: 31.07.2024

(51) International Patent Classification (IPC):
$H04N\ 19/132^{(2014.01)}$    $H04N\ 19/149^{(2014.01)}$
$H04N\ 19/172^{(2014.01)}$    $H04N\ 19/18^{(2014.01)}$
$H04N\ 19/59^{(2014.01)}$

(52) Cooperative Patent Classification (CPC):
H04N 19/59; H04N 19/132; H04N 19/149;
H04N 19/172; H04N 19/18

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GUERMOUD, Hassane**
**35235 THORIGNE-FOUILLARD (FR)**
• **MONIER, Antoine**
**56450 THEIX-NOYALO (FR)**
• **BORDES, Philippe**
**35890 LAILLE (FR)**
• **REUZE, Kevin**
**35700 RENNES (FR)**

(74) Representative: **Interdigital**
**Immeuble ZEN 2**
**845 A, avenue des Champs Blancs**
**35510 Cesson-Sévigné (FR)**

(54) **NEURAL NETWORK BASED DECISION FOR PICTURE RESOLUTION CHANGE IN VIDEO CODING**

(57) A method of video encoding is presented. At least one feature is obtained from a picture. For each resampling ratio, a quantization switch and a resampling class are determined using a neural network with the at least one feature as input. A resampling ratio and a decision on whether reference picture resampling is to be applied to encode the picture are determined based on the quantization switches, the resampling classes and a quantization parameter to be used for encoding the picture. The picture is encoded responsive to the determining.

800

```
┌──────────────────────────────────────────────────────────────┐
│          Obtain at least one feature from a picture           │ S802
└──────────────────────────────────────────────────────────────┘
                              ↓
┌──────────────────────────────────────────────────────────────┐
│ Determine a quantization switch and a resampling class per     │ S804
│ resampling ratio using a neural network with the at least one  │
│              feature as input                                   │
└──────────────────────────────────────────────────────────────┘
                              ↓
┌──────────────────────────────────────────────────────────────┐
│ Determine whether reference picture resampling is to be applied │ S806
│ to encode the picture based on the quantization switches, the   │
│ resampling classes and a quantization parameter to be used for  │
│ encoding the picture                                            │
└──────────────────────────────────────────────────────────────┘
                              ↓
┌──────────────────────────────────────────────────────────────┐
│        Encode the picture responsive to the determining.       │ S808
└──────────────────────────────────────────────────────────────┘
```

**FIG. 8**

EP 4 687 341 A1

## Description

## BACKGROUND

The present application is related to relate to a method and an apparatus for video encoding that uses picture resolution change.

## BRIEF SUMMARY

Briefly stated, in one embodiment, a method of video encoding is presented. At least one feature is obtained from a picture. For each resampling ratio, a quantization switch and a resampling class are determined using a neural network with the at least one feature as input. A resampling ratio and a decision on whether reference picture resampling is to be applied to encode the picture are determined based on the quantization switches, the resampling classes and a quantization parameter to be used for encoding the picture. The picture is encoded responsive to the determining.

An apparatus for video encoding is also presented. The apparatus comprises one or more processors and at least one memory coupled to said one or more processors. The one or more processors are configured to obtain at least one feature from a picture. For each resampling ratio, the one or more processors are configured to determine a quantization switch and a resampling class using a neural network with the at least one feature as input. The one or more processors are configured to determine a resampling ratio and a decision on whether reference picture resampling is to be applied to encode the picture based on the quantization switches, the resampling classes and a quantization parameter to be used for encoding the picture. The one or more processors are configured to encode the picture responsive to the determining.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates resampling for inter-prediction in an encoder;
FIG. 5 illustrates resampling for inter-prediction in a decoder .
FIG. 6 illustrates picture resolution changes with usage of RPR for inter-prediction .
FIG. 7 illustrates RD curves (anchor vs. RPR);
FIG. 8 depicts a flowchart of a method for encoding a picture according to an embodiment ;
FIG. 9 illustrates RD curves of one frame encoded at four resolutions ;
FIGs 10A-10C represent RD curves of one frame ;
FIG. 10D represents one sample of the training dataset comprising an image feature and its corresponding QP switches and class-label;
FIG. 11 depicts a method for deciding whether or not to apply downscaling to a picture to be encoded using a quantization parameter value according to an embodiment;
FIG. 12A depicts a method for deciding whether or not to apply downscaling to a picture to be encoded with a LUT;
FIG. 12B shows all classification and regression outputs combinations that ends to achieve downscaling decision and downscaling ratio;
FIG. 13 illustrates examples of HOGs;
FIG. 14 illustrates Discrete Cosine Transform (DCT) coefficients;
FIG. 15 illustrates aggregation and concatenation of HOG vectors, DCT coefficients and down-up PSNR value, according to an embodiment;
FIG. 16 illustrates DCT coefficients pooling according to a first embodiment;
FIG. 17 illustrates DCT coefficients aggregation per frequency channel; and
FIG. 18 illustrates DCT coefficients pooling according to a second embodiment.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

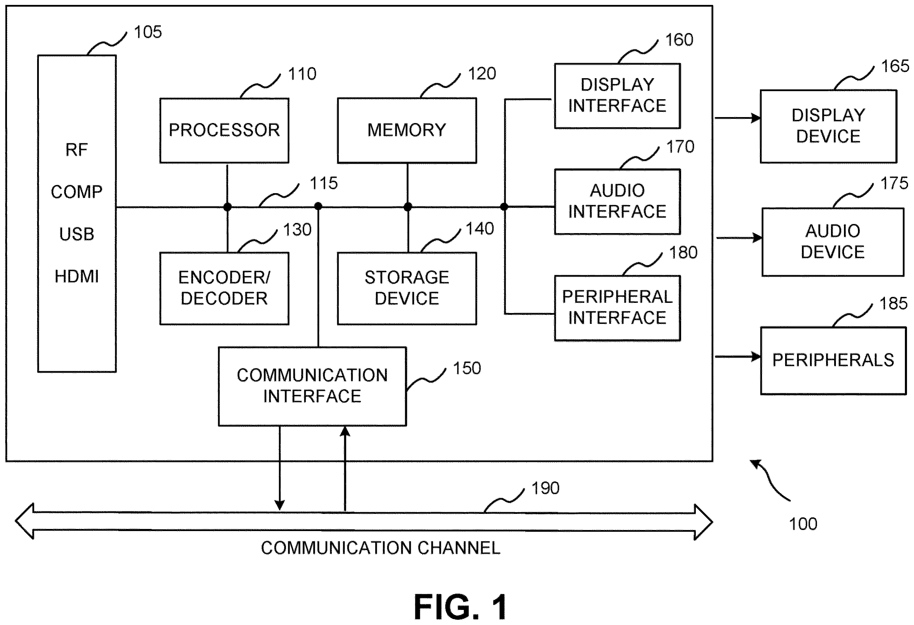

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

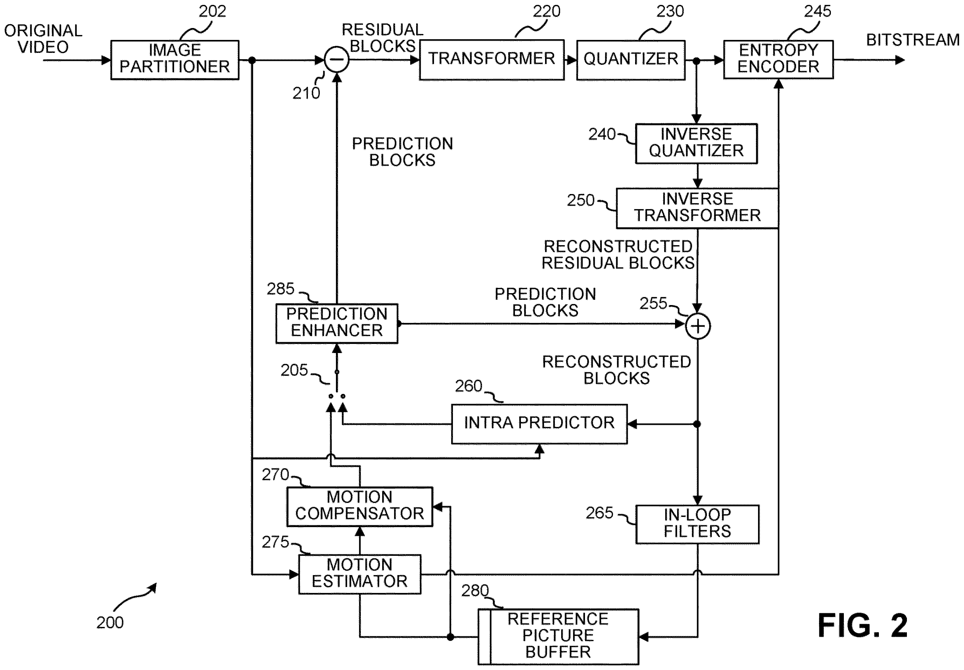

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

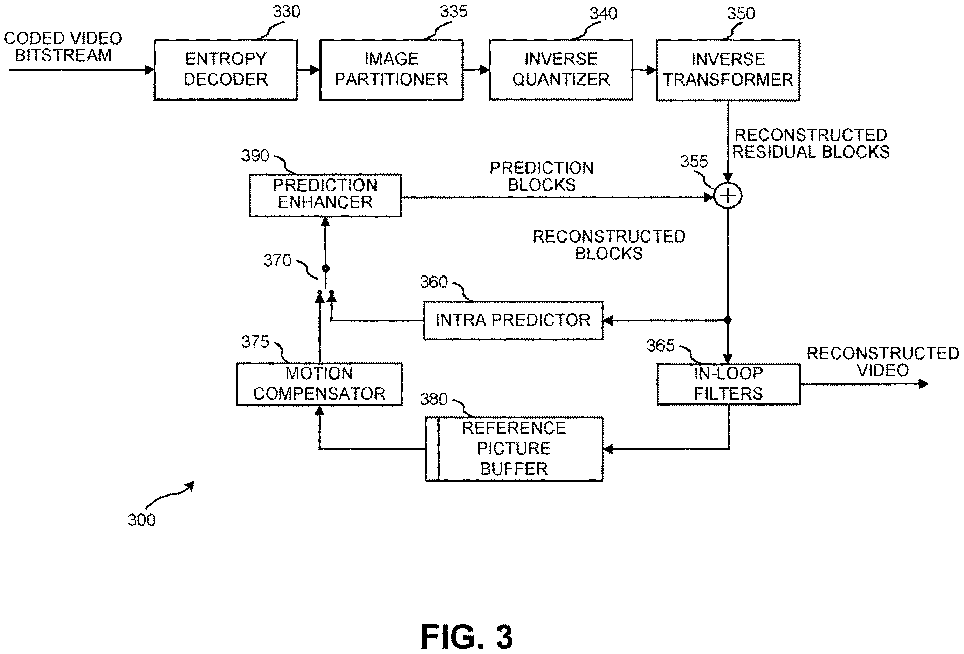

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

### Reference Picture Resampling (RPR)

Given an original video sequence composed of pictures of size (width x height), an encoder (e.g., the encoder 200) may choose for each frame which resolution (picture size) to use for coding the frame. The picture-based re-scaling feature for video coding is named Reference Picture Resampling (RPR), e.g., in Versatile Video Coding (VVC/H.266). Different picture parameter sets (PPS) may be coded in the bitstream with the possible sizes of the pictures and the slice/picture header may indicate which PPS to use to decode the current video coding layer (VCL) network abstraction layer (NAL) unit.

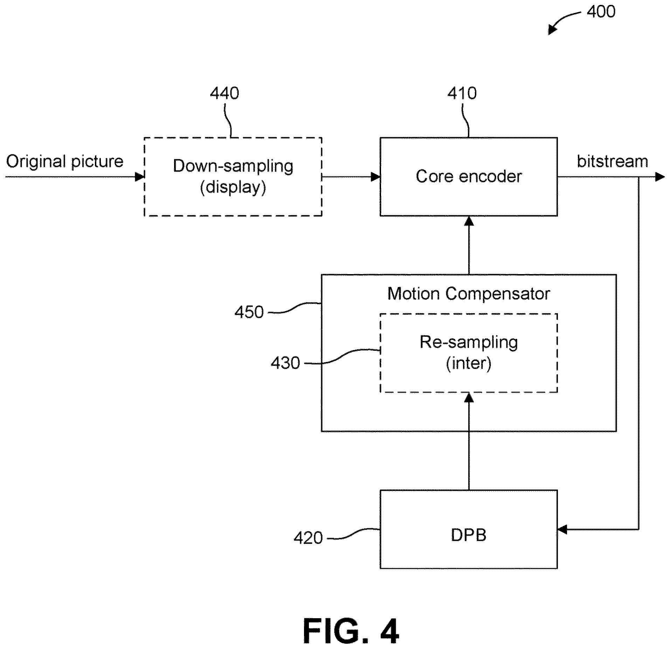

FIG. 4 is a functional block diagram of an example encoder (400) using RPR. The encoder (400) includes a down-sampler (440), a core encoder (410), a re-sampler (430, a component of motion compensator 450), and a decoded picture buffer (DPB, 420 also known as reference picture buffer). The encoder (400) is employed to encode an original video into a coded video bitstream. In an aspect, the core encoder (410) represents the encoder (200) of FIG. 2, except for the reference picture buffer (280) and the motion compensator (270) that are shown in FIG. 4 as decoded picture buffer (420) and motion compensator (450), respectively. In the following, the terms "down-sampling", "subsampling" and "down-scaling" may be used interchangeably and the terms "up-sampling" and "upscaling" may be used interchangeably. The terms "down-scaled ratio", "downsampling factor", "scaling factor" and "scale factor" may be used interchangeably.

In the example of FIG. 4, for each input frame of the original video of width W and of height H, the encoder (400) can select whether to encode the frame at the original frame size or at a reduced frame size. If the encoder selects to encode at a reduced frame size, the input frame is down-sampled, by the down-sampler (440), before the frame is encoded by the core encoder (410). For example, the frame may be sub-sampled (440) by a resolution rate of 1/1, resulting in frame size of width W/2 and of height H/2. The decision whether to encode a frame at the original frame size or at a reduced frame size can be done by the encoder (400). For example, the choice can be made by comparing coding results of the input frame at various resolutions, e.g., by two pass encoding, or by considering spatial and temporal activity in input frames of the original video. Consequently, when image content from a currently encoded frame and a corresponding content from a reference frame (needed for inter-prediction of the content from the currently encoded frame) are not at the same resolution, a resampling operation is required. In VVC, the resampling operation and the motion compensation are combined into one single step. This can be done by the re-sampler (430) that can be configured to change the resolution of image content from reference frames to a resolution that matches the resolution of content from the current frame. Along with down-sampling (440), a QP offset may be applied when encoding the downsampled picture, e.g., a negative QP offset of -6 may be applied when encoding a picture downsampled by a ratio of 2. Therefore, the downsampled picture is quantized less strongly. This makes it possible to keep a similar bitrate from frame to frame, i.e., whatever the down-sampling ratio.

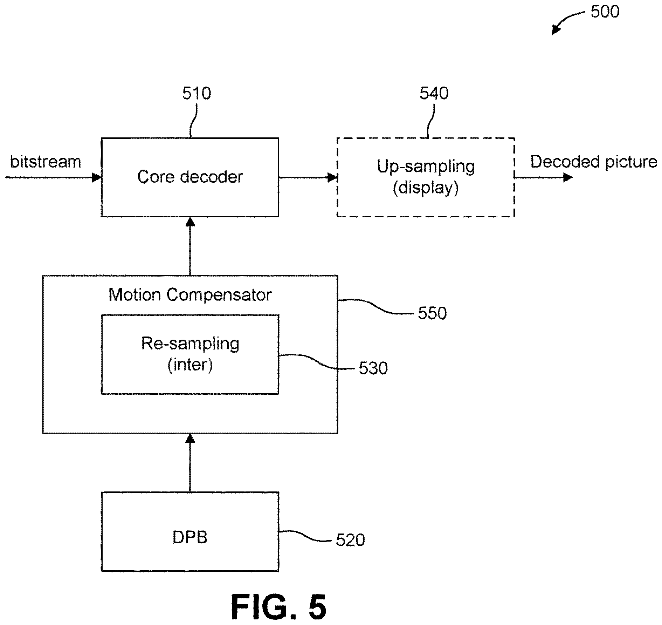

FIG. 5 is a functional block diagram of an example decoder (500) using RPR. The decoder (500) includes a core decoder (510), a re-sampler (530, a component of motion compensator 550), a decoded picture buffer (520), and an up-sampler (540). The decoder (500) is employed to decode the original video from a given coded video bitstream, resulting in the output video. In an aspect, the core decoder (510) represents the decoder (300) of FIG. 3, except for the reference picture buffer (380) and the motion compensator (375) that are shown in FIG. 5 as decoded picture buffer (520) and motion compensator (550), respectively. In the example of FIG. 5, image content from one or more frames (stored in the decoded picture buffer 520) that is needed as reference to inter-predict image content from a currently decoded frame may be re-sampled, by the re-sampler (530), into a resolution that matches the resolution of the currently decoded image content. The video frames that are decoded in a reduced resolution are up-sampled to the resolution of the original video, by the up-sampler (540), resulting in the output video. Note that the down-sampler (440) of FIG. 4 (e.g., employed in a pre-processing stage) and the up-sampler (540) of FIG. 5 (e.g., employed in a post-processing stage) are not specified by the VCC standard.

As explained previously, for each frame of the original video, the encoder chooses/selects whether to encode the frame at the original or down-sized resolution (e.g., picture width/height divided by 2). Consequently, the decoded picture buffer of the encoder 400 or decoder 500 (i.e., DPB, 420, 520) can contain frames having different sizes than the current frame size. In case one reference picture in the DPB has a size different from the current picture, the resampling (430, 530), i.e., up-scaling or down-scaling, of the reference block to build the prediction block is made implicitly during the motion compensation process.

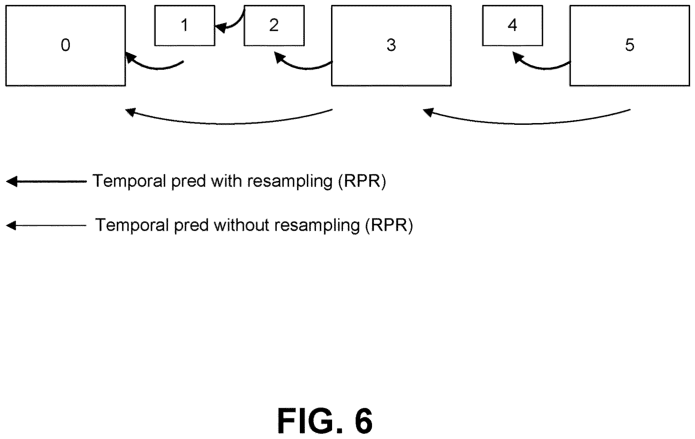

FIG. 6 illustrates the application of RPR in a coded stream with successive pictures having different picture resolutions. This feature is for instance useful for adaptive streaming, to adapt the bitrate to the network constraints. Even if it is not normatively specified, the down-sampled pictures, that are not at the resolution indicated in the HLS, need to be resampled to show all decoded pictures on the end-display at a same (display or target) resolution, as illustrated in FIG. 5 (540).

## Evaluation of video coding performance

Rate-distortion and complexity are two criteria that are usually used to compare video codec performance. Rate-distortion measures the compression efficiency and gives the relationship between the bitrate (Eq. 1) and the quality of the reconstructed video. Peak Signal to Noise Ratio (PSNR) (Eq. 2) is often used to evaluate the quality, where $1\,(i,j)$ and $K(i,j)$ represent pixel at (i, j) position in the original image I and pixel at (i, j) position in the reconstructed image K, respectively.

$$Bitrate = \frac{number\ of\ bits}{number\ of\ frames} * frame\ rate \qquad (1)$$

$$PSNR = 10log_{10}(\frac{MAX(I)^2}{MSE}),\ where\ MSE = \frac{1}{m*n}\sum_{i=0}^{m-1}\sum_{j=0}^{n-1}[I(i,j) - K(i,j)]^2 \qquad (2)$$

Generally, a tradeoff between the bitrate and the distortion is controlled by a quantization parameter (QP) input. Video codec performance is evaluated by performing the bitrate and PSNR measurement at several QP values, constituting the rate distortion curve (RD-curve).

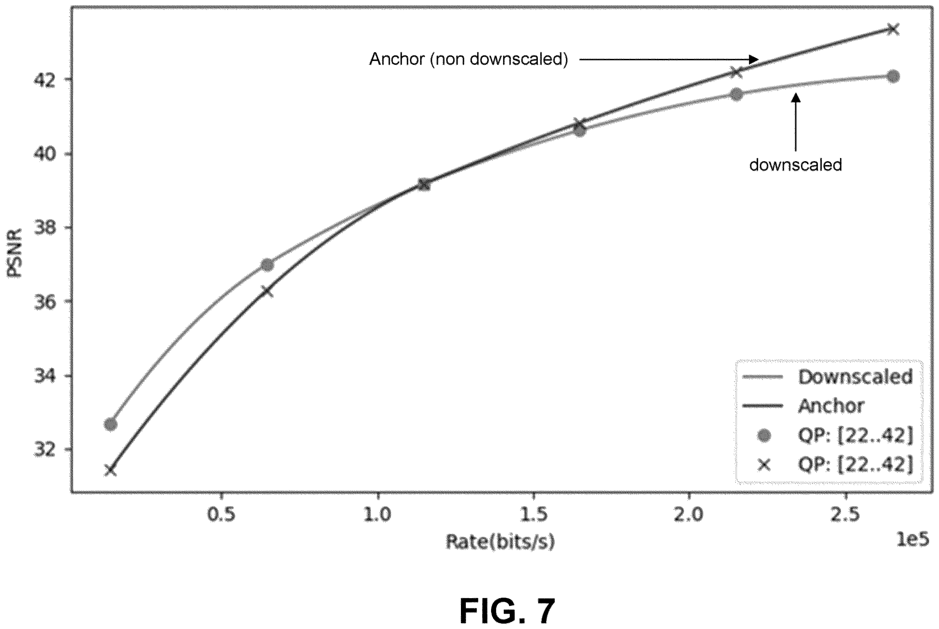

Traditionally, if one wants to compare the performance of two versions of the same video encoder for a range of QPs, Bjontegaard delta rate (BD-rate) measurement is used to measure the average bitrate and the quality difference between RD-curve of each version of the encoder, as shown in an example in **FIG. 7.**

An RPR encoder may re-scale input pictures before encoding. In the case of RPR (downscaled) vs non-RPR (anchor frame, i.e., non downscaled) encoder version, BD-rate gain is usually in favor of RPR for high QP values (i.e., low bitrate) as shown in FIG. 7. Notice that the crossing point also known as a QP switch is video content dependent. It does not have the same value and can be different from frame to frame or from a group of frames to another. Estimated QP switch could be used as a value from which can be decided to apply or not the subsampling mode (also referred to as RPR mode).

One option is to let the RDO (Rate Distortion Optimization) in the encoder to decide when to apply subsampling (RPR mode). However, this requires at least N+1 passes of encoding, one pass for encoding a full resolution image and the N other passes for the N down-scaled ratios, i.e., one pass for each down-scaled ratio (a.k.a. downsampling factor or scale factor). This option has the drawback of putting additional complexity at the encoder in terms of encoding time which is, in general, what one would like to avoid.

Another option is to apply dynamically image rescaling for RPR mode. In an example, a method may be used to select the picture resolution change parameters depending on the video signal characteristics. The picture resolution change decision may be based on a low complexity neural network, and may be performed before the encoding process without RD-score computations making this approach suitable for real time and low delay implementations. A neural network regressor may be trained to predict the QP switch value from a set of features computed on Intra frame of each GOP. Rescaling decision may be performed according to the QP switch.

In another example, a neural network regressor is trained to jointly predict a QP switch and a downscaling ratio for reference picture resampling. When a downscaling decision is enabled, a post-processing method may be used to carry out an optimal downscaling ratio according to the quantization parameter input.

In another example, a GOP-based selection method may be used that decides when to encode pictures in reduced resolution with RPR or not. The selection may be based on the quantization parameter (QP) and on the picture self-similarity after re-scaling. The self-similarity measurement is only conducted on the first source picture in display order within each GOP. If the re-scaled picture is considered to have sufficient similarity with the source picture, all pictures in the GOP are encoded at reduced resolution, otherwise they are encoded in the source resolution.

In yet another example, an RPR encoder control may be used that uses multiple re-sampling factors, such as x2.0 (half size) and x1.5 (2/3 size). At each GOP, the encoder can select a scale factor based on overall QP and a PSNR value which is calculated between the source and down-up sampling pictures for the first picture of each GOP.

In general, the present document introduces a method to infer an optimal QP switch and resampling (e.g., downscaling) ratio, e.g., by training a combined regression and classification neural network model (NN model). Once trained, the NN model may be used (inference stage) to decide for a current picture to be encoded at a given QP whether to apply the resampling (e.g., downscaling) on the current picture. The resampling of the picture is, for example, performed by applying an adapted resampling (e.g., downscaling) filter.

On embodiment introduces a unified neural network combining a regression and classification model for a multi-ratio rescaling (downscaling) decision at encoder side. In another embodiment, a multiscale features extraction and pooling is performed to train the neural network for resampling ratio (e.g., downscaling ratio) and QP switch estimations.

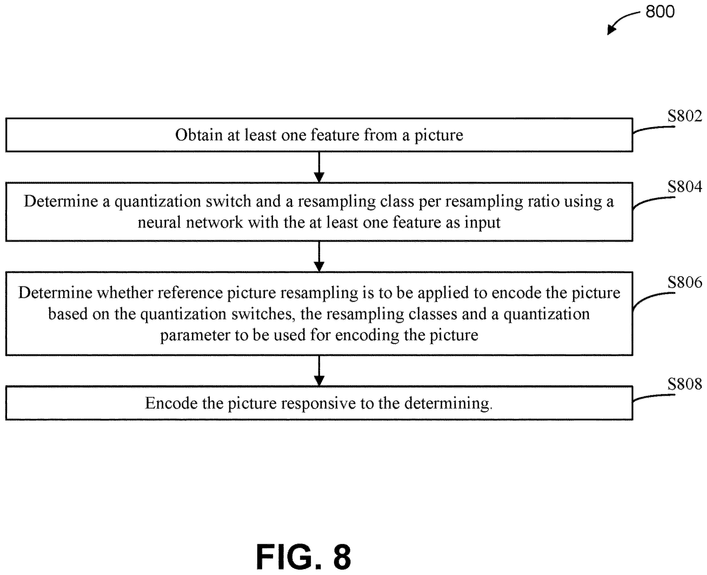

**FIG. 8** depicts a method 800 for encoding a picture, e.g., a picture of a video.

At S802, at least one feature is obtained from a picture (e.g., DCT coefficients, Histogram Of Oriented Gradients, Down-up PSNR, etc). In an example, the at least one feature is a 1D vector of features, e.g., of DCT coefficients.

At S804, a quantization switch and a resampling class are determined per resampling ratio using a neural network (e.g., a fully connected neural network) with the at least one feature as input. In an example, the neural network is a unified multi-layer perceptron (MLP) Neural Network that combines simultaneously a regression and a classification to determine (e.g. to estimate) respectively, from the input image at least one feature (e.g., characteristics), the QP switch values and the corresponding rescaling/resampling (e.g., downscaling/downsampling) classes. In an example, three resampling classes are defined. The first class C1 (Full_RPR) corresponds to a full downsampling (i.e., applying downsampling whatever the QP parameter is), the second class C2 (Partial_RPR) corresponds to a partial downsampling and the third class C3 (No_RPR) corresponds to no downsampling (i.e., no downsampling whatever the QP parameter is).

At S806, it is determined whether reference picture rescaling/resampling (e.g., downscaling/downsampling) is to be applied to encode the picture based on the quantization switch value determined for each ratio, the resampling class determined for each ratio and a quantization parameter (QP) used for encoding the picture. Said otherwise, at a given input QP, the encoder decides accordingly whether to apply reference picture resampling (e.g., downscaling) or not to the picture to be encoded and the associated ratio.

At S808, the picture is encoded responsive to the determining. In an example, if the decision is to resample the picture, the picture is resampled using the associated ratio prior to its encoding. Otherwise (the decision indicates no resampling), the picture is encoded without being resampled.

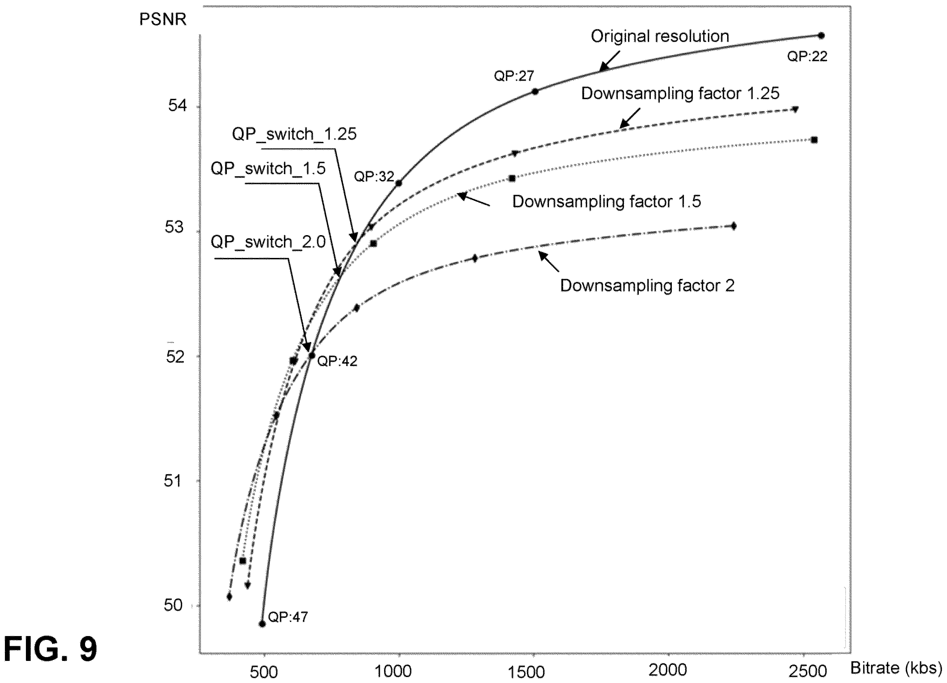

The NN used at S804 may be trained, e.g., offline, on a training dataset. Each element (e.g., sample) of the training dataset is assigned, per ratio, a QP switch and resampling class (e.g., a downscaling ratio class-label). The QP switch values may be derived by encoding pictures (e.g., frames) at their original and their downscaled resolutions as depicted on **FIG. 9.** The figure illustrates RD curves example of one picture encoded at four different resolutions each one corresponding to the following downscaling ratios (a.k.a. factors) {1, 1.25, 1.5, 2.0}. The ratios {1.25, 1.5 and 2.0} are only given as examples. Different ratios may be used. More or less than three ratios may be used. The downscaling ratio 1 corresponds to the original resolution. The encoding process is performed with a plurality QP values (e.g., 6 QP values {22, 27, 32, 37, 42, 47}). Three QP switch values (namely one QP switch value per downsampling ratio) are obtained when (Rate, PSNR) values of original resolution is equal to (Rate, PSNR) values of downscaled one. For example, QP_switch_1.25 identifies the QP switch value to switch between original resolution and the downscaled resolution with the ratio 1.25. Indeed, for QP values larger than QP_switch_1.25, the downscaled resolution is of better quality than the original version (higher PSNR at a given bitrate) while for QP values smaller than QP_switch _1.25, the original version is of better quality.

The class-label comprises three labels, namely one per ratio, e.g., {Class_ratio_1.25, Class_ratio_1.5, Class_ratio_2.0} of three classes each, e.g., {Full_RPR, Partial_RPR, No_RPR}. The Full_RPR refers to a class where downscaling is applied at every QP (i.e., RPR is always applied on the picture whatever the QP is), Partial_RPR refers to a class where downscaling is applied for some QPs and original version (no downscaling) is used for other QPs and No_RPR refers to a class where downscaling never applies (i.e., original resolution is used whether the QP is). In the Partial_RPR, the switch between applying downscaling and using the original resolution is defined by the associated QP switch value.

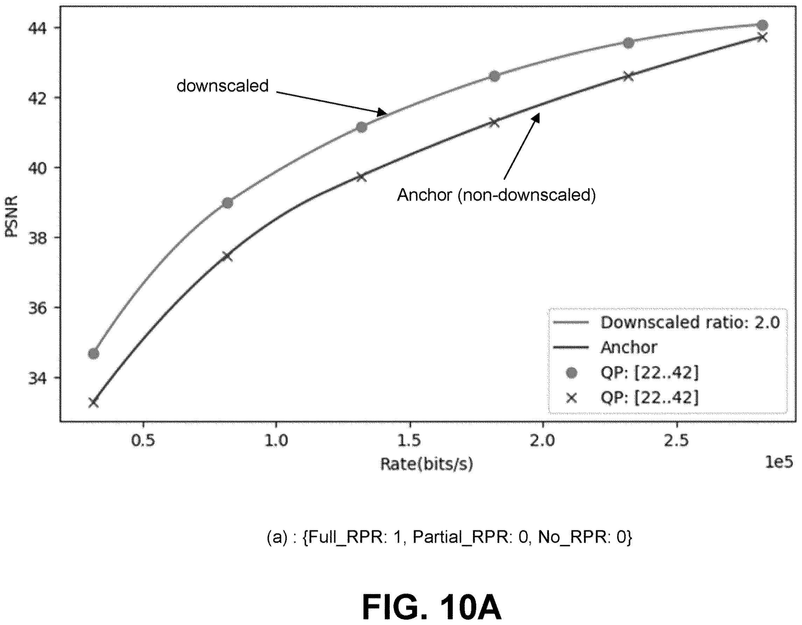

Similarly, values of class-label are set depending on the rate distortion curves as illustrated on FIGs 10A to 10C. Three cases can be noted when encoding a downscaled picture compared to the original one. In the first case depicted on **FIG. 10A,** coding efficiency is in favor of downscaled frame at every QPs. Indeed, on FIG. 10A, the RD curve of the downscaled resolution is above the RD curve of the anchor picture (i.e., the picture at original resolution).

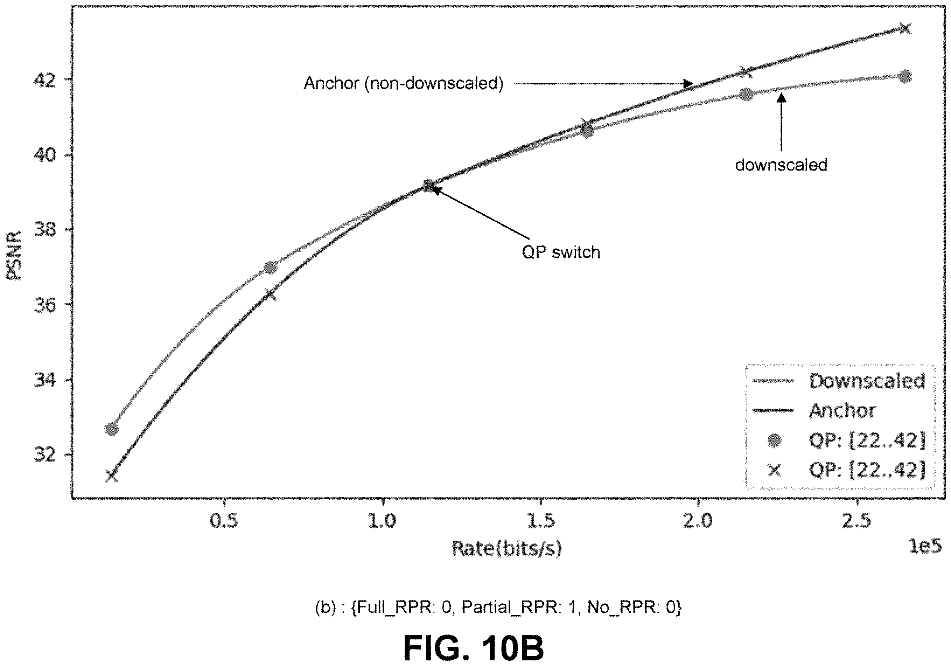

In the second case depicted on **FIG. 10B,** coding efficiency is in favor of partial downscaling, e.g., only at High QPs. On FIG. 10B, the RD curve of the downscaled resolution is above the RD curve of the anchor picture at high QP (i.e., at QPs larger than the QP switch value) while the RD curve of the anchor picture (i.e., the picture at original resolution) is above the RD curve of the downscaled resolution at lower QPs (i.e., at QPs larger than the QP switch value).

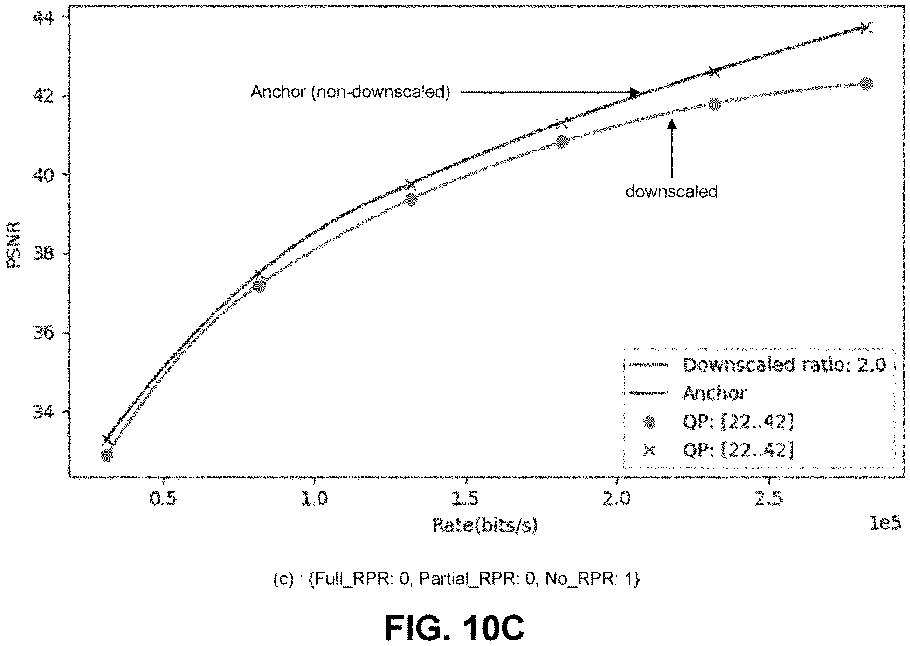

In the third case depicted on **FIG. 10C,** coding efficiency is in favor of no downscaling at all. On FIG. 10C, the RD curve of the anchor picture (i.e., the picture at original resolution) is above the RD curve of the downscaled resolution

Consequently, the three resampling classes C1, C2 and C3 can be set as follows, respectively: {Full_RPR: 1, Partial_RPR: 0, No_RPR: 0}, {Full RPR: 0, Partial_RPR: 1, No_RPR: 0} and {Full_RPR: 0, Partial RPR: 0, No_RPR: 1}.

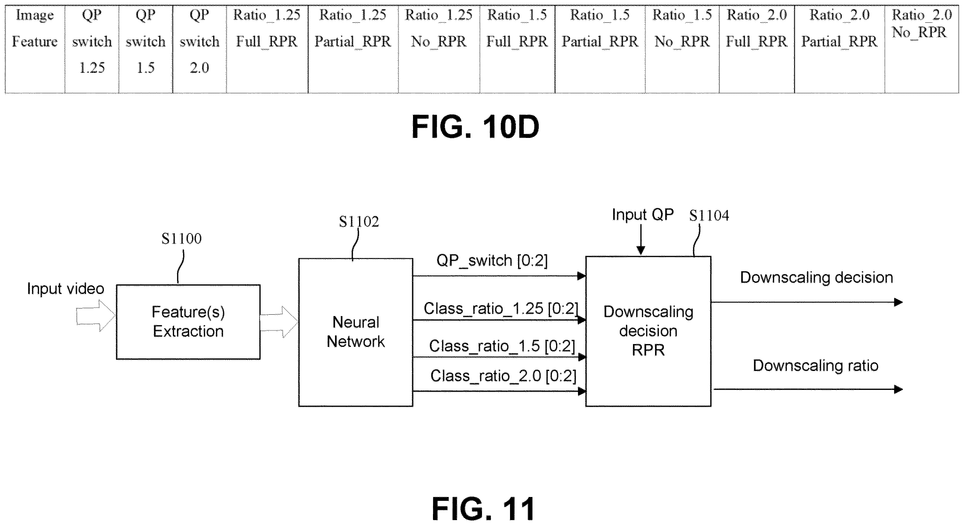

The training dataset is then defined as a list of elements (e.g., a list of image features vectors), each one mapped to its correspondent QP switches, and class-label values as presented in **FIG. 10D.**

**FIG. 11** depicts a method for deciding whether or not to apply downscaling to a picture to be encoded using a quantization parameter value (named input QP).

At S1100, at least one feature (e.g., one feature vector) is extracted from a picture of the input video.

At S1102, the trained neural network (e.g., a FC neural network) is used with the features as input to output for a current picture to be encoded the values of QP switch for each ratio 1.25, 1.5 and 2.0 (e.g., QP_switch[0:2] on FIG. 11) and the class-label values for each ratio value 1.25, 1.5 and 2.0 (e.g., Class_ratio_1.25[0:2], Class_ratio_1. 5[0:2], Class_ratio_2.0[0:2]).

In an example, the values may be the one of Table 1, wherein the first three values correspond to the QP switch, the next three values correspond to the class-labels for the ratio 1.25, the next three values to the class-labels for the ratio 1.5, and the last three values the class-labels for the ratio 2.

**Table 1**

| 34 | 38 | 42 | 0 | 1 | 0 | 0 | 1 | 0 | 0 | 1 | 0 |
|----|----|----|---|---|---|---|---|---|---|---|---|

In the example of Table 1, for all ratios, the class is defined as Partial_RPR, i.e., by the following values {Full RPR: 0, Partial RPR: 1, No_RPR: 0}.

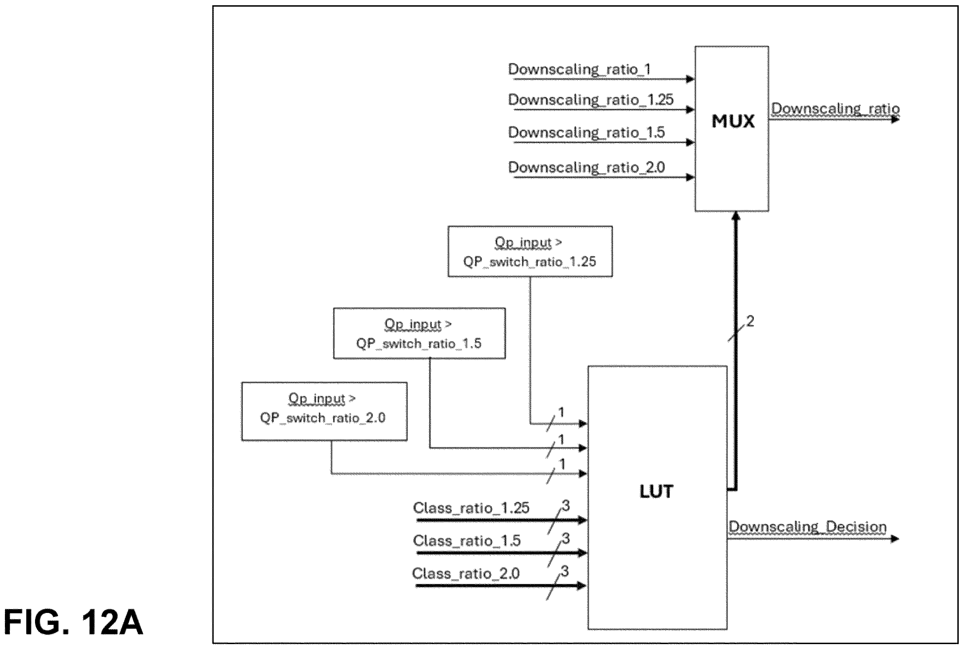

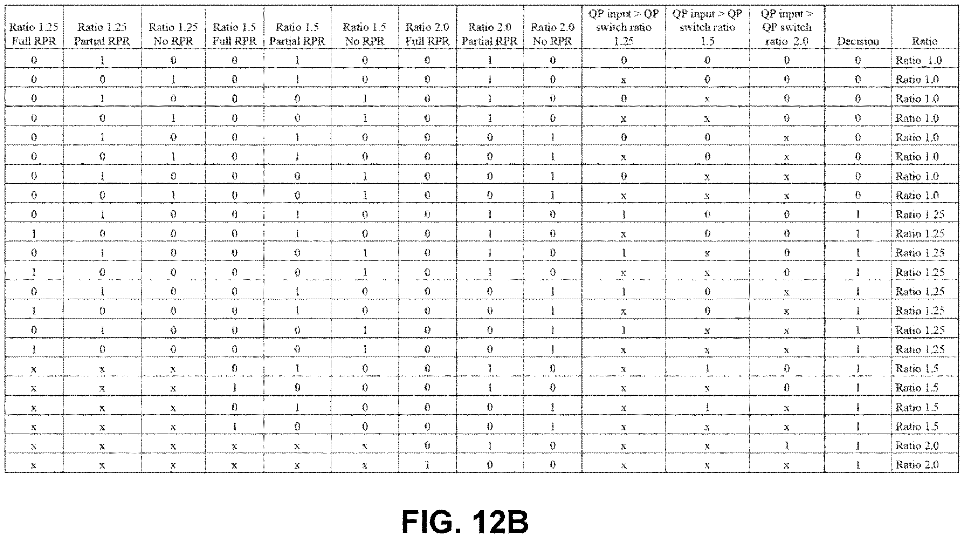

At S1104, a decision (e.g., downscaling decision) and a corresponding ratio (e.g., downscaling ratio) are issued for the picture based on the values provided by the Neural Network and the input QP. The decision may be implemented using a LUT (Look-Up Table) as illustrated by **FIG. 12A** using the information of FIG. 12B. **FIG. 12B** shows all classification and regression outputs combinations that ends to achieve downscaling decision and downscaling ratio. The outputs of the LUT are composed of one bit dedicated to downscaling decision and two bits of multiplexer select lines (e.g., S0, S1). Below a pseudo code shows how selection of downscaling ratio may be performed:

```
If (S1S0 = ="00") then
   downscaling_ratio = downscaling_ratio_1
else if (S1S0 = ="01") then
   downscaling_ratio = downscaling_ratio_1.25
else if (S1S0 = ="10") then
   downscaling_ratio = downscaling_ratio_1.5
else if (S1S0 = ="11") then
   downscaling_ratio = downscaling_ratio_2.0
```

Note that with each input combination of the LUT downscale ratio and downscale decision outputs are associated according to the table presented in **FIG. 12B.** An 'x' can take a value of '0' or '1' indifferently. The use of a LUT is only an example.

The NN used at S1102 combines regression and classification neural network (e.g., MLP neural network) and was trained to predict simultaneously QP switch values and their corresponding class-label from a single input (e.g., a concatenated vector resulting from the feature extraction at S1100). The NN comprises a common set of layers (e.g., MLP layers) ending with two separate layers, i.e. one regression output layer, and one classification output layer. As an example, the common part holds one input layer and at least one hidden layer (e.g., two hidden layers) of a plurality of nodes (e.g., of 16 nodes) each and use ReLu activation function. In an example, the Regression output has N nodes (e.g., three nodes corresponding to QP_switch_1.25, QP_switch_1.5, QP_switch_2.0) and a linear or sigmoid activation function where N is the number of downscaling ratios. In an example, the classification output has N groups of 3 nodes [Ratio_1.25_Full_RPR, Ratio_1.25_partial_RPR, Ratio_1.25_no_RPR], [Ratio_1.5_Full_RPR, Ratio 1.5_partial RPR, Ratio_1.5_no_RPR], [Ratio_2.0_Full_RPR, Ratio 2.0_partial_RPR, Ratio_2.0_no_RPR], using thus one Softmax activation function per group. The number of neurons per layer and the number of layers can be adjusted during the training phase in order to get a good performance of the predictor in terms of precision and generalization to new images.

The training step is performed to train the neural network weights parameters, by processing a large number of labeled samples that have been prepared offline. Samples here correspond to features (e.g., Down-Up PSNR, HOG, DCT) extracted from images of video sequences and their labels (QP switch values and class labels). Backpropagation and gradient descent are two algorithms that are usually used to tune the neural network weights in order to minimize an error between the predicted value and the ground-truth label. In an example, the whole model may be trained (e.g., offline) with a weighted loss function combining a regression loss (e.g., MSE) and three categorical Cross-Entropy losses as presented in Equations (1), (2), (3).

$$Loss_{total} = \alpha * Loss_{regression} + (1 - \alpha) * \sum_{label}^{Clabel} Loss_{classification}^{label} \qquad (1)$$

$$Loss_{regression} = \frac{1}{QPsw * N}\left(\sum_{i=0}^{QPsw}\sum_{j=0}^{N}\left(QP_{switch(i,j)} - \widehat{QP}_{switch(i,j)}\right)^2\right) \qquad (2)$$

$QP_{switch}$:$QP_{switch}$ targeted, $QP_{switch}$:$QP_{switch}$ predicted

$QP_{sw}$: Number of QPs switch to predict, 3 in this example respectively, 1.25, 1.5, 2

N: Number of samples in the training dataset

$$Loss_{classification}^{label} = \frac{1}{C * N}\left(\sum_{k=0}^{N}\sum_{j=0}^{C} y(k,j)Log(S(k,j))\right) \qquad (3)$$

y(k, j): ground_truth label of sample k and class j

S(k, j): Class probability predicted for sample k and class j

C: Number of classes, 3 in this example (Full_RPR, Partial_RPR, No_RPR)

N: Number of samples in the training dataset

## Feature extraction

Feature(s) are extracted (S804, 51100) prior to Neural Network training or inference. Extraction may comprise pooling and concatenation The features used are, for example, the following : Down-up PSNR, DCT coefficients, HOG (Histogram Of Oriented Gradients). The method comprises extraction and multiscale DCT coefficients pooling. Features extraction process is applied on every input image or every $N^{th}$ image depending on the encoder configurations, e.g., All Intra (AI) or Random Access (RA). Three parallel steps may be performed for features extraction for a picture to be encoded (e.g., for an input video frame):

■ Down-up PSNR: calculates a PSNR between the original image and a downscaled image, e.g., by factor 4 and rescaled to the original resolution. This feature provides information on the quality of the image reconstruction.

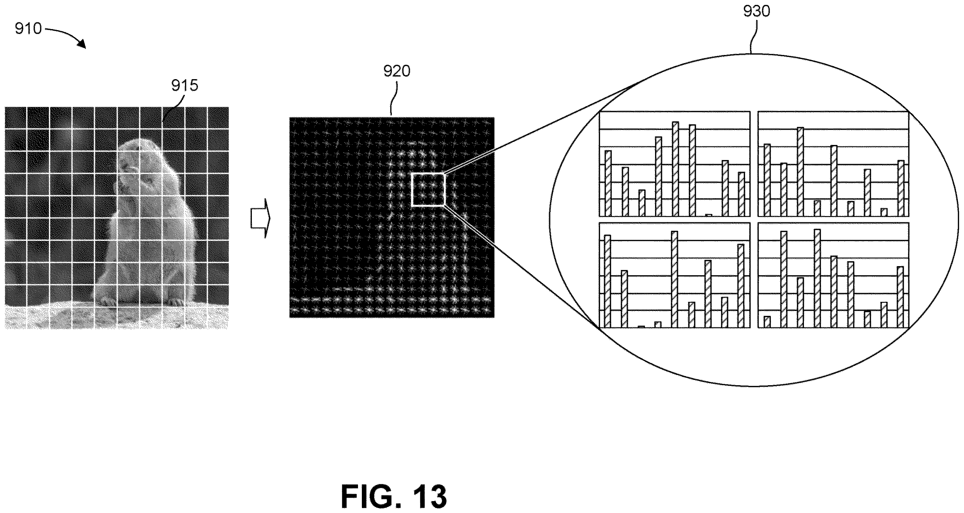

■ HOG features: Calculates a Histogram of Oriented Gradients (920) on patches (blocks) extracted from the original image (910), as illustrated in **FIG. 13.** This feature counts the occurrence of gradient orientation (930), and usually are calculated on a dense grid (915) of uniform spaced patches obtained from an image. The HOG feature provides information on the distribution of the edge directions.

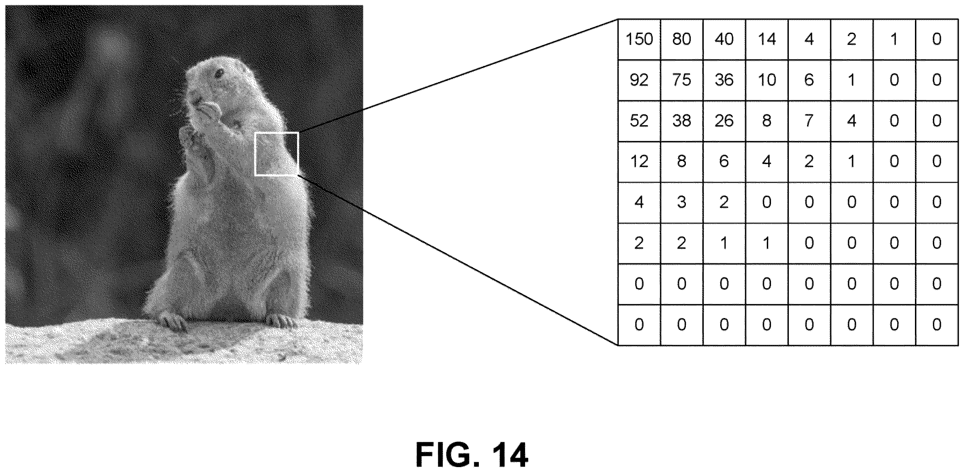

■ DCT: Discrete Cosine Transform converts image pixels from spatial domain to frequency domain. For example, the image is divided into patches of, for example, 8 by 8 pixels and then DCT is applied on each patch to obtain DCT coefficients as shown in an example in **FIG. 14.** High frequency coefficients are on bottom-right while low frequency coefficients on top-left. DCT and IDCT are given by equations (4), (5) and (6). This feature provides valuable information on frequency distribution in the original image.

$$F(u,v) = \frac{1}{4}C(u)C(v)\sum_{i=0}^{7}\sum_{j=0}^{7}f(i,j)\cos((2i+1)u\frac{\pi}{16})\cos((2j+1)v\frac{\pi}{16}) \quad (4)$$

$$f(i,j) = \frac{1}{4}\sum_{u=0}^{7}\sum_{v=0}^{7}C(u)C(v)F(u,v)\cos((2i+1)u\frac{\pi}{16})\cos((2j+1)v\frac{\pi}{16}) \quad (5)$$

$$C(\omega) = \begin{cases} \frac{1}{\sqrt{2}}, \omega = 0 \\ 1, \omega = 1,2,...7 \end{cases} \quad (6)$$

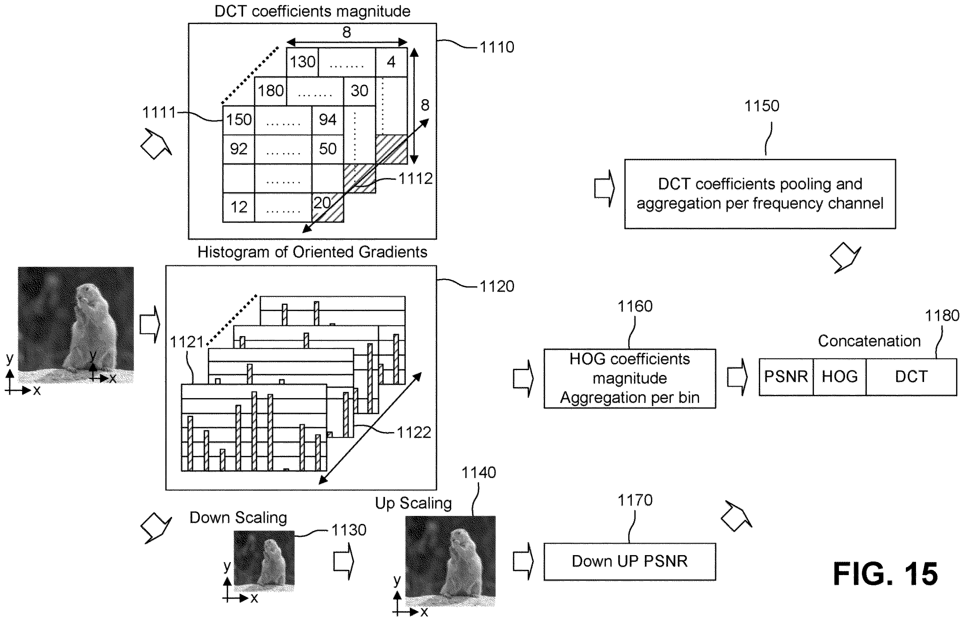

**FIG.** 15 illustrates the pooling and concatenation of DCT coefficients and the aggregation and concatenation of HOG vectors, and down-up PSNR value, according to an example. Let us take an example of an image of size 32* 32 pixels. After dividing the image in 8 * 8 pixels patches (16 patches), DCT coefficients (1111) and HOG (1121) are calculated on each patch, and reshaped (1110, 1120) along z axis, resulting in 16 patches of 8 * 8 DCT coefficients (1110) and 16 histograms of oriented gradients (1120).

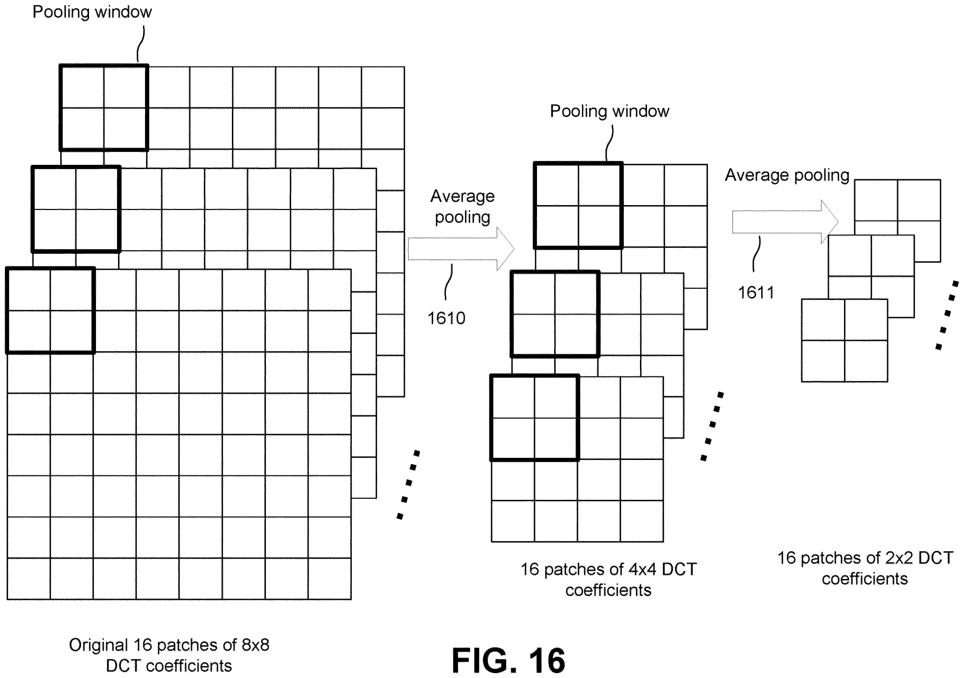

The DCT pooling process (1150) is detailed on **FIG. 16** comprises several steps. First, coefficients of each patch are averaged (1610) in a first pooling area (e.g., in a window of size 2*2). This first step provides a first level of downsampled DCT coefficients (e.g., in 16 patches of 4*4 DCT coefficients each). Optionally, it may be followed by a second level of average pooling (1611) providing a second level of downsampled DCT coefficients (e.g., in 16 patches of 2*2 DCT coefficients each). In the second level of average pooling (1611), the coefficients of each 4*4 patch are averaged in a second pooling area (e.g., in a window of size 2*2). The second pooling area may be the same or different from the first pooling area.

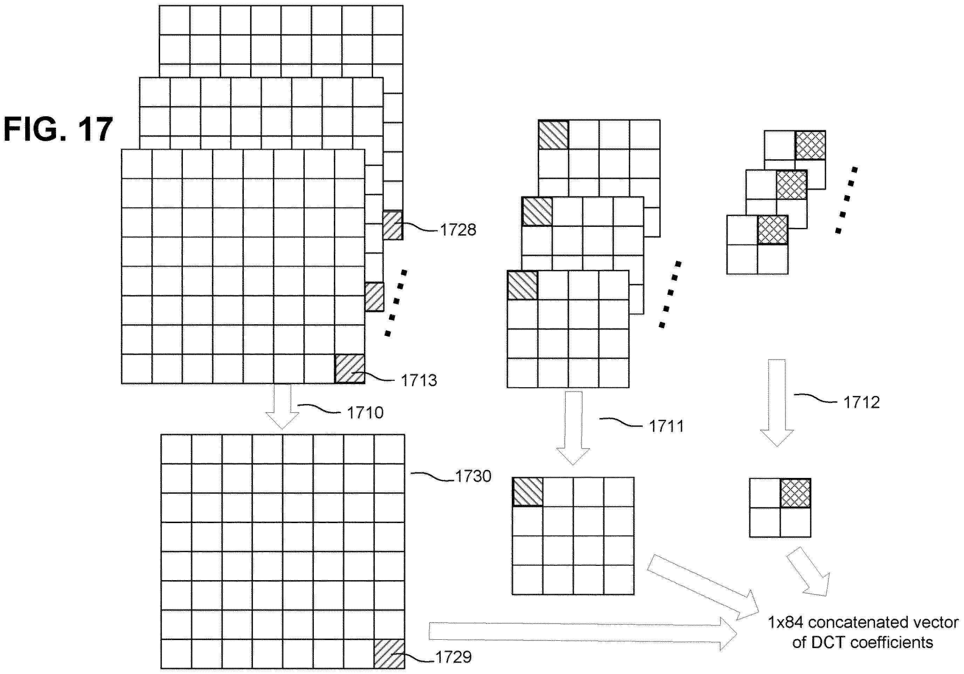

Second, the DCT coefficients are aggregated per frequency channel (1150). The aggregation process is illustrated by **FIG. 17.** To this aim, a median value or an average value is calculated (1710, 1711, 1712) on each frequency channel over the (e.g., 16) patches belonging to the same level of scale (e.g., downsampling scale) including the original DCT patches. As an example, the 16 bottom right coefficients (1713-1728) of the 8*8 patches are averaged or their median value is selected and used as the coefficient (1729) for this frequency channel in the final patch (1730). The same is repeated for all frequency channels and for all level of downsampling scales (i.e., for 4*4 and 2*2 patches in the example). The obtained DCT coefficients values are then re-arranged in a 1D vector (known as flatten/reshaping operation) to provide a concatenated vector of DCT coefficients which is ready to be combined with the other features.

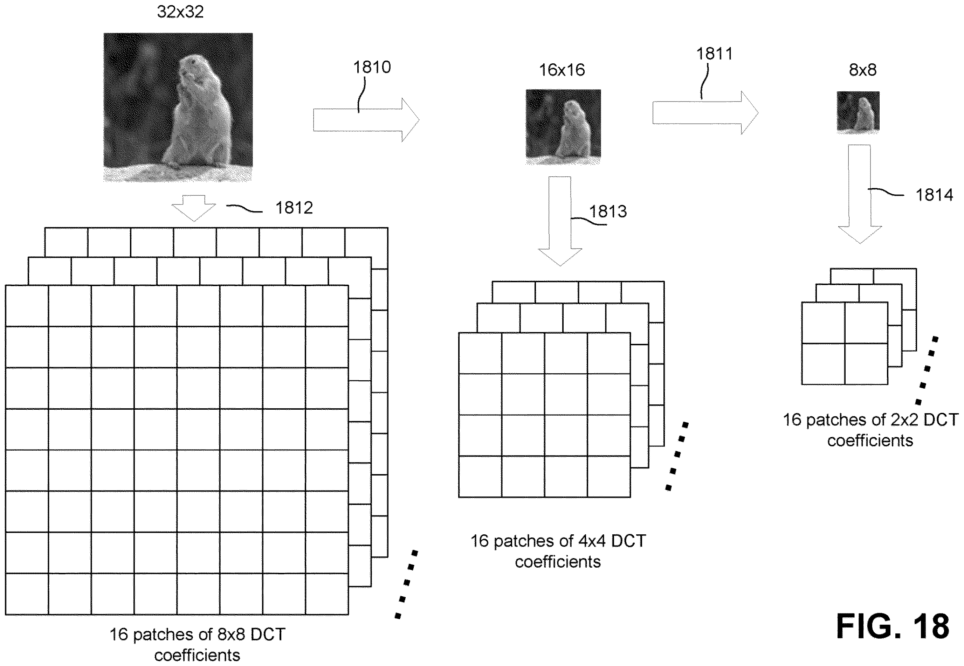

In a variant illustrated by **FIG. 18,** DCT coefficients are extracted from a multiscale downsampling image resolution and a pooling of features is applied. Original image (e.g., of 32x32 pixels on FIG. 18) is dowsampled twice (1810, 1811) by factor of 2 in horizontal and vertical directions. Note that the size of the image and of the downsampling factor can have other values.

The DCT transform is applied (1812, 1813, 1814) on the original image and on each downsampled image using blocks of different size, e.g., of respectively 8x8, 4x4 and 2x2. The DCT coefficients are then aggregated (not represented on FIG. 18) per frequency channel as illustrated on FIG. 17. A median value or average value is thus calculated on each frequency channel over the 16 patches belonging to the same level of scale of DCT patches. Then, a concatenated DCT coefficients vector is obtained.

In case of HOG aggregation (1160), average or median value is computed along z axis for each bin (1122) of oriented gradient getting 1D vector of 9 bins. Note that the number of bins can be set to another value.

The down-up PSNR value is calculated (1170) between the original image and a downscaled image (1130), e.g., by factor 4 and rescaled (1140) to the original resolution.

Finally, the feature pre-processing module outputs (1180) a 1D concatenated vector composed of the down-up PSNR value, 1D HOG vector and 1D DCT coefficients vector.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. A bitstream that includes one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values (e.g., size of images, of patches, HOG bins, downsampling ratio, etc) are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

    i. session description protocol (SDP), for example as described in RFCs and/or used in conjunction with real-time transport protocol (RTP) transmission.

    ii. hypertext transfer protocol (HTTP) live Streaming (HLS) manifest transmitted over HTTP.

    iii. dynamic adaptive streaming over HTTP (DASH) media presentation description (MPD) descriptors, for example as used in DASH and transmitted over HTTP.

    iv. RTP header extensions, for example as used during RTP streaming.

    v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

**1.** A method of video encoding, comprising:

    obtaining at least one feature from a picture;
    determining, for each resampling ratio, a quantization switch and a resampling class using a neural network with the at least one feature as input;

determining a resampling ratio and whether reference picture resampling is to be applied to encode the picture based on the quantization switches, the resampling classes and a quantization parameter to be used for encoding the picture; and

encoding the picture responsive to the determining.

2. The method of claim 1, wherein the resampling class indicates for a resampling ratio whether the resampling is a full resampling, a partial resampling or a no resampling.

3. The method of claim 1 or 2, wherein the neural network comprises a common set of layers ending with a regression output layer and a classification output layer different from the regression output layer.

4. The method of claim 3, wherein the common set of layers comprises one input layer and at least one hidden layer and uses ReLu activation function.

5. The method of claim 3 or 4, wherein the regression output layer has a plurality of nodes and uses a linear or sigmoid activation function, wherein each node of the plurality of node is associated with a particular resampling ratio and wherein the classification output layer has N groups of three nodes and uses one Softmax activation function per group, wherein N is equal to a number of resampling ratios.

6. The method of any one claims 1 to 5, wherein obtaining at least one feature from a picture to encode comprises:

transforming a plurality of blocks of a picture to obtain a plurality of transform coefficient sets;
downsampling each set of transform coefficients to obtain a plurality of downsampled transform coefficient sets;
aggregating the transform coefficients per frequency channel for both the plurality of transform coefficient sets and the plurality of downsampled transform coefficient sets; and
concatenating the transform coefficients into a feature vector to form an input for the neural network.

7. The method of claim 6, wherein aggregating the transform coefficients per frequency channel is based on a median value or an average value of transform coefficients, at each frequency, of the plurality of transform coefficient sets or of the plurality of downsampled transform coefficient sets.

8. The method of any one claims 1 to 5, wherein obtaining at least one feature from a picture to encode comprises:

downsampling the picture to obtain a downsampled picture;
transforming a plurality of blocks of the picture to obtain a first plurality of transform coefficient sets and transforming a plurality of blocks of the downsampled picture to obtain a second plurality of transform coefficient sets;
aggregating the transform coefficients per frequency channel for both the first plurality of transform coefficient sets and the second plurality of transform coefficient sets; and
concatenating the transform coefficients into a feature vector to form an input for the neural network.

9. An apparatus for video encoding comprising one or more processors and at least one memory coupled to said one or more processors, wherein said one or more processors are configured to perform:

obtaining at least one feature from a picture;
determining, for each resampling ratio, a quantization switch and a resampling class using a neural network with the at least one feature as input;
determining a resampling ratio and whether reference picture resampling is to be applied to encode the picture based on the quantization switches, the resampling classes and a quantization parameter to be used for encoding the picture; and
encoding the picture responsive to the determining.

10. The apparatus of claim 9, wherein the resampling class indicates for a resampling ratio whether the resampling is a full resampling, a partial resampling or a no resampling.

11. The apparatus of claim 9 or 10, wherein the neural network comprises a common set of layers ending with a regression output layer and a classification output layer different from the regression output layer.

12. The apparatus of claim 11, wherein the common set of layers comprises one input layer and at least one hidden layer and uses ReLu activation function.

13. The apparatus of claim 11 or 12, wherein the regression output layer has a plurality of nodes and uses a linear or sigmoid activation function, wherein each node of the plurality of node is associated with a particular resampling ratio and wherein the classification output layer has N groups of three nodes and uses one Softmax activation function per group, wherein N is equal to a number of resampling ratios.

14. The apparatus of any one claims 9 to 13, wherein obtaining at least one feature from a picture to encode comprises:

transforming a plurality of blocks of a picture to obtain a plurality of transform coefficient sets ;
downsampling each set of transform coefficients to obtain a plurality of downsampled transform coefficient sets;
aggregating the transform coefficients per frequency channel for both the plurality of transform coefficient sets and the plurality of downsampled transform coefficient sets; and
concatenating the transform coefficients into a feature vector to form an input for the neural network.

15. The apparatus of any one claims 9 to 13, wherein obtaining at least one feature from a picture to encode comprises:

downsampling the picture to obtain a downsampled picture;
transforming a plurality of blocks of the picture to obtain a first plurality of transform coefficient sets and transforming a plurality of blocks of the downsampled picture to obtain a second plurality of transform coefficient sets;
aggregating the transform coefficients per frequency channel for both the first plurality of transform coefficient sets and the second plurality of transform coefficient sets; and
concatenating the transform coefficients into a feature vector to form an input for the neural network.

**FIG. 1**

EP 4 687 341 A1

FIG. 2

**FIG. 3**

**FIG. 4**

**FIG. 5**

EP 4 687 341 A1

Temporal pred with resampling (RPR)

Temporal pred without resampling (RPR)

**FIG. 6**

**FIG. 7**

Flowchart 800:

- **S802**: Obtain at least one feature from a picture
- **S804**: Determine a quantization switch and a resampling class per resampling ratio using a neural network with the at least one feature as input
- **S806**: Determine whether reference picture resampling is to be applied to encode the picture based on the quantization switches, the resampling classes and a quantization parameter to be used for encoding the picture
- **S808**: Encode the picture responsive to the determining.

**FIG. 8**

FIG. 9

EP 4 687 341 A1

(a) : {Full_RPR: 1, Partial_RPR: 0, No_RPR: 0}

FIG. 10A

(b) : {Full_RPR: 0, Partial_RPR: 1, No_RPR: 0}

**FIG. 10B**

EP 4 687 341 A1

(c) : {Full_RPR: 0, Partial_RPR: 0, No_RPR: 1}

**FIG. 10C**

EP 4 687 341 A1

| Image Feature | QP switch 1.25 | QP switch 1.5 | QP switch 2.0 | Ratio_1.25 Full_RPR | Ratio_1.25 Partial_RPR | Ratio_1.25 No_RPR | Ratio_1.5 Full_RPR | Ratio_1.5 Partial_RPR | Ratio_1.5 No_RPR | Ratio_2.0 Full_RPR | Ratio_2.0 Partial_RPR | Ratio_2.0 No_RPR |
|---|---|---|---|---|---|---|---|---|---|---|---|---|
| | 1.25 | 1.5 | 2.0 | | | | | | | | | |

**FIG. 10D**

**FIG. 11**

EP 4 687 341 A1

Downscaling_ratio_1

Downscaling_ratio_1.25

Downscaling_ratio_1.5

Downscaling_ratio_2.0

**MUX**

Downscaling_ratio

Qp_input >
QP_switch_ratio_1.25

Qp_input >
QP_switch_ratio_1.5

Qp_input >
QP_switch_ratio_2.0

2

1

1

1

**LUT**

Class_ratio_1.25    3

Class_ratio_1.5    3

Class_ratio_2.0    3

Downscaling_Decision

# FIG. 12A

| Ratio 1.25 Full RPR | Ratio 1.25 Partial RPR | Ratio 1.25 No RPR | Ratio 1.5 Full RPR | Ratio 1.5 Partial RPR | Ratio 1.5 No RPR | Ratio 2.0 Full RPR | Ratio 2.0 Partial RPR | Ratio 2.0 No RPR | QP input > QP switch ratio 1.25 | QP input > QP switch ratio 1.5 | QP input > QP switch ratio 2.0 | Decision | Ratio |
|---|---|---|---|---|---|---|---|---|---|---|---|---|---|
| 0 | 1 | 0 | 0 | 1 | 0 | 0 | 1 | 0 | 0 | 0 | 0 | 0 | Ratio_1.0 |
| 0 | 0 | 1 | 0 | 1 | 0 | 0 | 1 | 0 | x | 0 | 0 | 0 | Ratio 1.0 |
| 0 | 1 | 0 | 0 | 0 | 1 | 0 | 1 | 0 | 0 | x | 0 | 0 | Ratio 1.0 |
| 0 | 0 | 1 | 0 | 0 | 1 | 0 | 1 | 0 | x | x | 0 | 0 | Ratio 1.0 |
| 0 | 1 | 0 | 0 | 1 | 0 | 0 | 0 | 1 | 0 | 0 | x | 0 | Ratio 1.0 |
| 0 | 0 | 1 | 0 | 1 | 0 | 0 | 0 | 1 | x | 0 | x | 0 | Ratio 1.0 |
| 0 | 1 | 0 | 0 | 0 | 1 | 0 | 0 | 1 | 0 | x | x | 0 | Ratio 1.0 |
| 0 | 0 | 1 | 0 | 0 | 1 | 0 | 0 | 1 | x | x | x | 0 | Ratio 1.0 |
| 0 | 1 | 0 | 0 | 1 | 0 | 0 | 1 | 0 | 1 | 0 | 0 | 1 | Ratio 1.25 |
| 1 | 0 | 0 | 0 | 1 | 0 | 0 | 1 | 0 | x | 0 | 0 | 1 | Ratio 1.25 |
| 0 | 1 | 0 | 0 | 0 | 1 | 0 | 1 | 0 | 1 | x | 0 | 1 | Ratio 1.25 |
| 1 | 0 | 0 | 0 | 0 | 1 | 0 | 1 | 0 | x | x | 0 | 1 | Ratio 1.25 |
| 0 | 1 | 0 | 0 | 1 | 0 | 0 | 0 | 1 | 1 | 0 | x | 1 | Ratio 1.25 |
| 1 | 0 | 0 | 0 | 1 | 0 | 0 | 0 | 1 | x | 0 | x | 1 | Ratio 1.25 |
| 0 | 1 | 0 | 0 | 0 | 1 | 0 | 0 | 1 | 1 | x | x | 1 | Ratio 1.25 |
| 1 | 0 | 0 | 0 | 0 | 1 | 0 | 0 | 1 | x | x | x | 1 | Ratio 1.25 |
| x | x | x | 0 | 1 | 0 | 0 | 1 | 0 | x | 1 | 0 | 1 | Ratio 1.5 |
| x | x | x | 1 | 0 | 0 | 0 | 1 | 0 | x | x | 0 | 1 | Ratio 1.5 |
| x | x | x | 0 | 1 | 0 | 0 | 0 | 1 | x | 1 | x | 1 | Ratio 1.5 |
| x | x | x | 1 | 0 | 0 | 0 | 0 | 1 | x | x | x | 1 | Ratio 1.5 |
| x | x | x | x | x | x | 0 | 1 | 0 | x | x | 1 | 1 | Ratio 2.0 |
| x | x | x | x | x | x | 1 | 0 | 0 | x | x | x | 1 | Ratio 2.0 |

## FIG. 12B

**FIG. 13**

EP 4 687 341 A1

FIG. 14

EP 4 687 341 A1

FIG. 15

Pooling window

Pooling window

Average pooling

Average
pooling

1610

1611

16 patches of 4x4 DCT
coefficients

16 patches of 2x2 DCT
coefficients

Original 16 patches of 8x8
DCT coefficients

**FIG. 16**

EP 4 687 341 A1

# FIG. 17

1728

1713

1710

1711

1712

1730

1729

1x84 concatenated vector of DCT coefficients

FIG. 18

Europäisches Patentamt
European Patent Office
Office européen des brevets

# EUROPEAN SEARCH REPORT

**Application Number**

EP 24 30 6293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Fernandez Afonso ET AL: "Intelligent Resampling Methods for Video Compression", DISSERTATION, 1 May 2019 (2019-05-01), XP055831239, Retrieved from the Internet: URL:https://research-information.bris.ac.uk/ws/portalfiles/portal/201099956/MarianaAfonso_finalPhDthesis.pdf [retrieved on 2021-08-10] * sections 5.2.1, 5.2.2, 5.6.1 * ----- | 1-15 | INV. H04N19/132 H04N19/149 H04N19/172 H04N19/18 H04N19/59 |
| A | SUN JIANXIANG ET AL: "A Perceptual-Driven Adaptive Reference Picture Resampling Method in VVC", 2024 INTERNATIONAL CONFERENCE ON UBIQUITOUS COMMUNICATION (UCOM), IEEE, 5 July 2024 (2024-07-05), pages 232-236, XP034719403, DOI: 10.1109/UCOM62433.2024.10695900 [retrieved on 2024-10-04] * section II; figure 4 * ----- | 1-15 | |
| A | US 2022/147822 A1 (XIN YING [CN] ET AL) 12 May 2022 (2022-05-12) * paragraphs [0057] - [0069]; figure 3B * ----- | 1-15 | TECHNICAL FIELDS SEARCHED (IPC) H04N |
| A | LEE JUN-TAE ET AL: "Semantic Line Detection and Its Applications", 2017 IEEE INTERNATIONAL CONFERENCE ON COMPUTER VISION (ICCV), IEEE, 22 October 2017 (2017-10-22), pages 3249-3257, XP033283193, DOI: 10.1109/ICCV.2017.350 [retrieved on 2017-12-22] * section3; figure 4 * ----- | 1-15 | |

The present search report has been drawn up for all claims

| Place of search | Date of completion of the search | Examiner |
|---|---|---|
| Munich | 10 January 2025 | Montoneri, Fabio |

## ANNEX TO THE EUROPEAN SEARCH REPORT
## ON EUROPEAN PATENT APPLICATION NO.

EP 24 30 6293

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| US 2022147822 A1 | 12-05-2022 | CN 112801164 A | 14-05-2021 |
| | | EP 4033453 A1 | 27-07-2022 |
| | | US 2022147822 A1 | 12-05-2022 |

EPO FORM P0459

For more details about this annex : see Official Journal of the European Patent Office, No. 12/82